# EUROPÄISCHE PATENTANMELDUNG

(11) **EP 0 634 850 A1**
(43) Veröffentlichungstag der Anmeldung: **18.01.1995**
(21) Anmeldenummer: 94110413.5
(22) Anmeldetag: 05.07.1994
(51) Int. Cl.: H04J 3/04

(54) **Verfahren zum Umsetzen eines parallelisierten, zeitlich gemultiplexten Datenstroms in einzelne serielle Datenströme und umgekehrt, sowie Umsetzer dafür**

(30) Priorität: 14.07.1993 DE 4323521
(71) Anmelder: Alcatel SEL Aktiengesellschaft, D-70435 Stuttgart (DE)
(72) Erfinder: Tooher, Michael James, D-71254 Ditzingen (DE)
(74) Vertreter: Brose, Gerhard

(57) **Zusammenfassung**

Umsetzen eines parallelisierten, zeitlich gemultiplexten Datenstroms (DIPM) in einzelne serielle Datenströme (DOSS1,DOSS2,...,DOSSn) und umgekehrt.

Gemultiplexter Datenstrom wird gedemultiplext, anschließend werden die einzelnen Datenströme serialisiert. Gegenrichtung entsprechend umgekehrt.

Verwendung eines Dual-Port-RAMS, bei dem so eingeschrieben und ausgelesen wird, daß dabei sowohl das Demultiplexen als auch die Parallel-Serien-Umsetzung (oder umgekehrt) erfolgt.

Implementierung durch "Application Specific RAM", dadurch geringstmöglicher Platzbedarf (ca. 20% von dem bei herkömmlicher Lösung).

## Beschreibung

Die Erfindung betrifft ein Verfahren zum Umsetzen eines parallelisierten, zeitlich gemultiplexten Datenstroms in einzelne serielle Datenströme nach dem Oberbegriff des Anspruchs 1, ein dazu umgekehrtes Verfahren nach dem Oberbegriff des Anspruchs 2, sowie Umsetzer zur Durchführung dieser Verfahren nach den Oberbegriffen der Ansprüche 3 und 4.

Solche Verfahren und die zugehörigen Umsetzer sind beispielsweise bekannt aus dem Artikel von D. Böttle et al., "Das ATM-Koppelfeld von Alcatel und seine Eigenschaften", Elektrisches Nachrichtenwesen, Band 64, Nummer 2/3, 1990, Seiten 156 - 165; dort insbesondere Bild 7 mit zugehöriger Beschreibung. Die dortige Darstellung zeigt ein kombiniertes Raum- und Zeit-Koppelelement aus der Vermittlungstechnik. Es weist 32 serielle Eingänge und 32 serielle Ausgänge auf. Jeder Eingangsdatenstrom und jeder Ausgangsdatenstrom setzt sich aus mehreren einzelnen zeitlich gemultiplexten Datenströmen zusammen, zwischen denen beliebig vermittelt werden kann. Im Beispiel sind die Datenströme in asynchroner Weise jeweils zu einem ATM-Datenstrom (ATM = Asynchronous Transfer Mode) zusammengefaßt. Es gibt auch vergleichbare Koppelelemente für in synchroner Weise gemultiplexte STM-Datenströme (STM = Synchronous Transfer Mode). Die Vermittlung erfolgt dadurch, daß alle Eingangsdatenströme mittels eines Multiplexers zu einem Supermultiplexdatenstrom zusammengefaßt werden, in einen zentralen Speicher eingeschrieben werden, aus dem zentralen Speicher in anderer Reihenfolge ausgelesen werden und einen zweiten Supermultiplexdatenstrom bilden, der dann mittels eines Demultiplexers auf die einzelnen Ausgänge verteilt wird.

Aus verschiedenen Gründen liegt im genannten und auch in anderen vergleichbaren Beispielen der Supermultiplexdatenstrom in paralleler Datenform vor. Ein Grund dafür liegt in der bei paralleler Verarbeitung reduzierten Verarbeitungsgeschwindigkeit. Ein anderer Grund liegt darin, daß bei der Abspeicherung im zentralen Speicher zusammengehörige Teile des Datenstroms, wie Datenwörter bei STM oder Zellen oder zumindest größere Zellteile bei ATM, zusammen abgespeichert werden sollten, wozu sich die Parallelverarbeitung anbietet.

Bei der im Beispiel gezeigten Lösung gibt es eingangs- und ausgangsseitig je eine Zwischenstufe, wo die Datenströme in parallelisierter Form, jedoch noch nicht bzw. nicht mehr als Supermultiplexdatenstrom vorliegen. Zwangsläufig ist in diesen Zwischenstufen eine sehr große Anzahl von Leitungen vorhanden, die allerdings nur mit deutlich reduzierter Übertragungsgeschwindigkeit betrieben werden. Grundsätzlich bestünde die Möglichkeit, die Umwandlungsreihenfolge derart zu vertauschen, daß als Zwischenstufe ein serieller Supermultiplexdatenstrom verwendet würde. Dieser müßte dann aber eine sehr hohe Übertragungsgeschwindigkeit aufweisen, was meist technologiebedingt nicht möglich ist.

Hier schafft die Erfindung Abhilfe durch Verfahren und Umsetzer nach der Lehre der Ansprüche 1 bis 4.

Dabei werden Demultiplexer und Parallel-Serien-Umsetzer derart baulich vereinigt, daß das Demultiplexen und das Parallel-Serien-Umsetzen in einem einzigen Vorgang erfolgen. Entsprechendes gilt für die Umkehrung der Vorgänge.

Vorteilhafte Ausgestaltungen der Erfindung sind den Unteransprüchen zu entnehmen.

Eine besonders vorteilhafte Ausführung ergibt sich durch die Verwendung speziell gestalteter Schreib-Lese-Speicher, sogenannter Application Specific RAM's. Verwendung finden dabei Speicher mit getrennten Ein- und Ausgängen (Dual-Port-RAM's). Der gesamte Speicher ist in einzeln aktivierbare Sektoren gegliedert. Eine RAM-Speicherzelle hat gegenüber anderen speichernden Elementen, wie Flip-Flops, einen sehr einfachen Aufbau. Ein kompletter erfindungsgemäßer Umsetzer benötigt gegenüber einem herkömmlich aufgebauten (zweistufigen) Umsetzer nur etwa 20 % an Chipfläche. Es ergibt sich selbst dann noch eine recht große Ersparnis, wenn für asynchronen Betrieb die Speicher dupliziert werden und, in an sich bekannter Weise, abwechselnd in den einen eingeschrieben und aus dem anderen ausgelesen wird.

Im folgenden wird die Erfindung anhand von Ausführungsbeispielen unter Zuhilfenahme der bei liegenden Zeichnungen weiter erläutert.

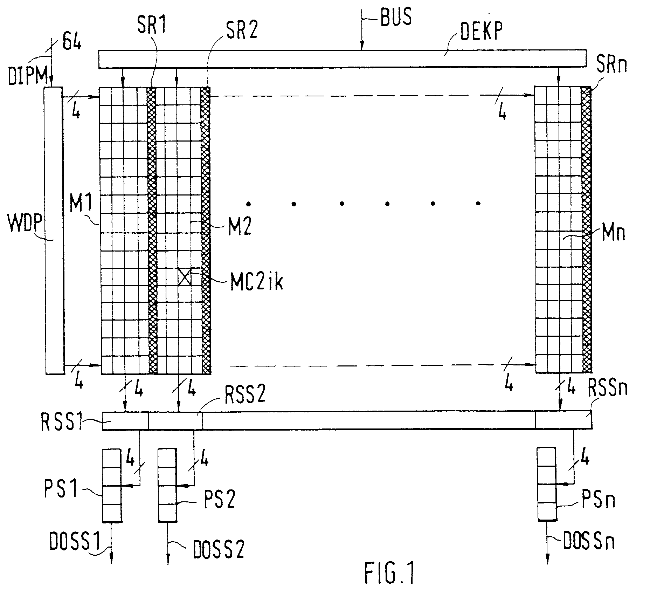

Die Figuren 1 bis 4 zeigen je ein Ausführungsbeispiel eines erfindungsgemäßen Umsetzers als Blockschaltbild.

Das in Figur 1 gezeigte erste Ausführungsbeispiel eines Umsetzers zum Umsetzen eines parallelisierten, zeitlich gemultiplexten Datenstroms DIPM in n einzelne serielle Datenströme DOSS1, DOSS2, ...., DOSSn weist eine parallelseitige Treibereinrichtung WDP zum Einschreiben von Daten, n Zwischenspeicher M1, M2, ..., Mn mit je einem zugeordneten Schieberegister SR1, SR2, ..., SRn, n seriellseitige Leseverstärker RSS1, RSS2, ..., RSSn mit je einem nachgeordneten Parallel-Serien-Wandler PS1, PS2, ..., PSn und eine parallelseitige Dekodiereinrichtung DEKP auf. Jeder Zwischenspeicher besteht aus 64 einzelnen Speicherzellen, die in 16 Zeilen und 4 Spalten angeordnet sind. Beispielhaft gekennzeichnet ist die Speicherzelle MC2ik. Weiter in Figur 1 eingezeichnet ist der Anschluß der parallelseitigen Dekodiereinrichtung DEKP an einen äußeren Bus BUS.

Der umzusetzende Datenstrom DIPM kommt auf 64 parallelen Leitungen im Zeitmultiplex an. In jedem der Zwischenspeicher M1, M2, ..., Mn ist jeder dieser 64 parallelen Leitungen eine Speicherzelle zugeordnet, wobei die Eingänge all der Speicherzellen parallelgeschaltet sind, die derselben Leitung zugeordnet sind. Wegen dieser Parallelschaltung ist in jede Leitung ein Treiber eingefügt; alle diese Treiber bilden zusammen die parallelseitige Treibereinrichtung WDP.

Die Eingänge aller 64 Speicherzellen eines Zwischenspeichers können von der Dekodiereinrichtung DEKP gleichzeitig aktiviert werden, wodurch dann ein komplettes aus 64 Bits bestehendes Datenwort des Datenstroms DIPM in diesen Zwischenspeicher eingeschrieben wird.

Ein zu vermittelnder Zeitmultiplex-Datenstrom mit 64-Bit-Datenwörtern ist nur bei asynchronem Zeitmultiplex, also bei ATM üblich. Bei STM sind allenfalls 16-Bit-Datenwörter üblich.

Bei ATM muß die Dekodiereinrichtung DEKP über den Bus BUS von außen mitgeteilt erhalten, zu welchem der einzelnen seriellen Datenströme DOSS1, DOSS2, ..., DOSSn das jeweilige 64-Bit-Datenwort gehört, um den richtigen Zwischenspeicher zum Einschreiben zu aktivieren. Im Falle von STM müßten die einzelnen Zwischenspeicher zyklisch aktiviert werden; der Bus BUS würde in diesem Fall zur Taktung und Synchronisation eines Zählers dienen.

Das Auslesen der Daten aus den Zwischenspeichern M1, M2, ..., Mn erfolgt prinzipiell Bit für Bit, im Beispiel jedoch in Vierergruppen. Solche teilweisen Parallelisierungen an sich als seriell betrachteter Datenströme oder auch die teilweise Serialisierung an sich als parallel betrachteter Datenströme ist durchaus üblich und dem Fachmann geläufig. So könnte es sich z.B. für Datenströme, die aus 48-Bit-Wörtern bestehen, anbieten, diese auf eine Wortbreite von 16 Bit zu parallelisieren und jeweils drei solcher aufeinanderfolgender 16-Bit-Wörter gemeinsam zu behandeln.

Im vorliegenden Beispiel werden also jeweils vier Speicherzellen gleichzeitig ausgelesen und über den jeweils zugeordneten seriellseitigen Leseverstärker RSS1, RSS2, ..., RSSn in den zugeordneten Parallel-Serien-Wandler PS1, PS2, ..., PSn eingeschrieben und daraus in voll serieller Form ausgelesen. Hierzu sind die Ausgänge aller vier in derselben Zeile liegenden Speicherzellen eines Zwischenspeichers gleichzeitig zum Auslesen aktivierbar, beispielsweise indem sie von einem hochohmigen in einen niederohmigen Zustand geschaltet werden. Die Ausgänge sind spaltenweise parallelgeschaltet und führen über die Leseverstärker zu den Eingängen der Parallel-Serien-Wandler.

Das Aus lesen der Daten aus den Zwischenspeichern wird durch die Schieberegister SR1, SR2, ..., SRn gesteuert. In jedem Schieberegister wird dann eine "Eins" an den Anfang gesetzt, wenn in den zugeordneten Zwischenspeicher ein Datenwort eingeschrieben wird. Diese "Eins" wandert dann durch das Schieberegister und aktiviert der Reihe nach Zeile für Zeile die Ausgänge von je vier Speicherzellen. Dabei wird jeweils wieder eine "Null" an den Anfang des Schieberegisters gesetzt.

In einfach gelagerten Gällen kann das Auslesen der Daten noch einfacher gesteuert werden. Ein solcher Fall liegt vor, wenn die Datenwörter vom Eingang zyklisch an die Ausgänge zu verteilen sind. In diesem Fall erfolgt das zeilenweise Auslesen jeweils um eine Zeile gegenüber dem benachbarten Zwischenspeicher versetzt. Wird also beispielsweise in einem Zwischenspeicher gerade die 7. Zeile ausgelesen, dann wird gleichzeitig im davorliegenden Zwischenspeicher die 8. Zeile ausgelesen und im nachfolgenden Zwischenspeicher die 6. Zeile. Die Aktivierung aller betroffenen Speicherzellen kann durch eine gemeinsame Leseleitung erfolgen, die stufenförmig durch alle Zwischenspeicher verläuft. Insgesamt sind dann in diesem Beispiel 16 solcher diagonal verlaufender Leseleitungen erforderlich, wobei dann auch die Zahl der Zwischenspeicher n= 16 ist. Zur Aktivierung genügt dann ein einziges Schieberegister. In diesem Fall vereinfacht sich auch die Dekodiereinrichtung DEKP derart, daß die Spalten zyklisch zum Einschreiben aktiviert werden. Damit kann sogar die Aktivierung je einer senkrechten Spaltenleitung zum Einschreiben und einer diagonal verlaufenden Leseleistung gemeinsam erfolgen.

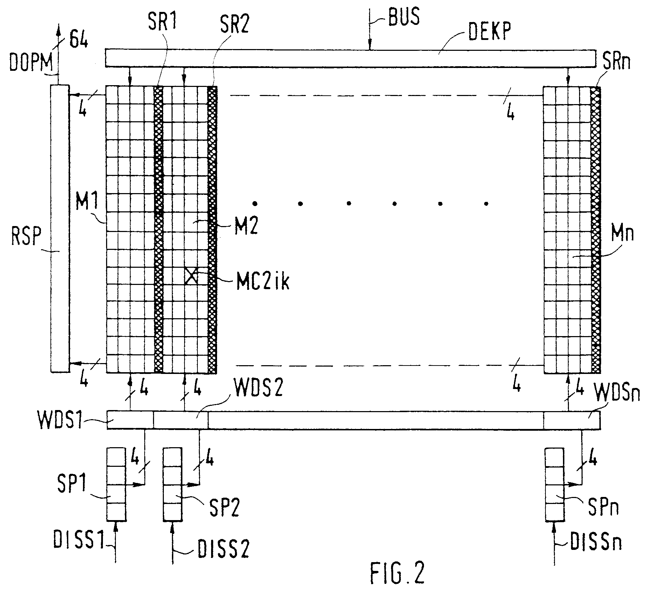

Figur 2 zeigt den analogen Umsetzer für die Gegenrichtung, also von einer Mehrzahl einzelner serieller Datenströme DISS1, DISS2, ..., DISSn in einen parallelisierten, zeitlich gemultiplexten Datenstrom DOPM. Die Struktur dieses Umsetzers ist genau gleich wie in Figur 1, jedoch ist der Datendurchlauf genau entgegengesetzt. Hierzu sind die Parallel-Serien-Wandler nach Figur 1 hier ersetzt durch Serien-Parallel-Wandler SP1, SP2, ..., SPn, an Stelle der seriellseitigen Leseverstärker liegen hier seriellseitige Treiber WDS1, WDS2, ..., WDSn, zum Einschreiben von Daten, die die Funktion der parallelseitigen Treibereinrichtung WDP übernehmen, während an deren Stelle eine parallelseitige Leseverstärkereinrichtung RSP getreten ist. Bei diesem Umsetzer sind die Ausgänge der Speicherzellen zeilenweise und die Eingänge spaltenweise parallelgeschaltet. Von der parallelseitigen Dekodiereinrichtung DEKP werden immer die Ausgänge aller 64 Speicherzellen eines Zwischenspeichers gleichzeitig zum Auslesen von Daten aktiviert, während die Schieberegister SR1, SR2, ..., SRn jeweils die vier in derselben Zeile liegenden Speicherzellen des zugehörigen Zwischenspeichers zum Einschreiben von Daten aktiviert. In ein Schieberegister wird dann eine "Eins" eingegeben, wenn im zugehörigen Datenstrom DISS1, DISS2, ..., DISSn ein neues 64-Bit-Datenwort beginnt.

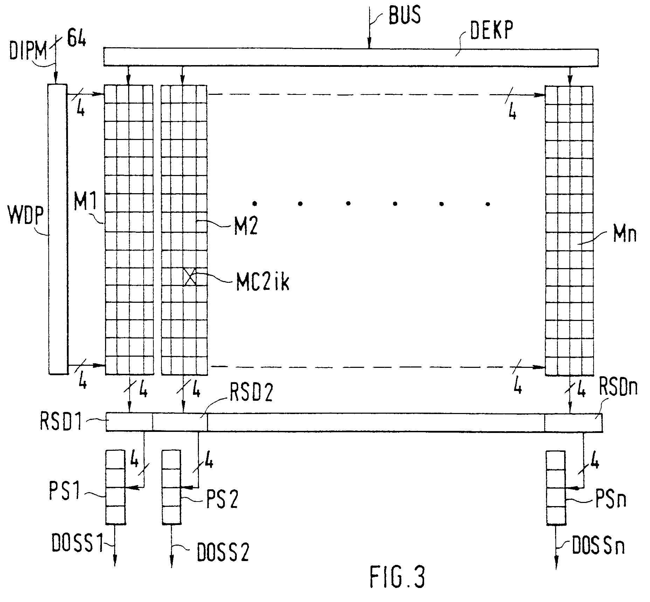

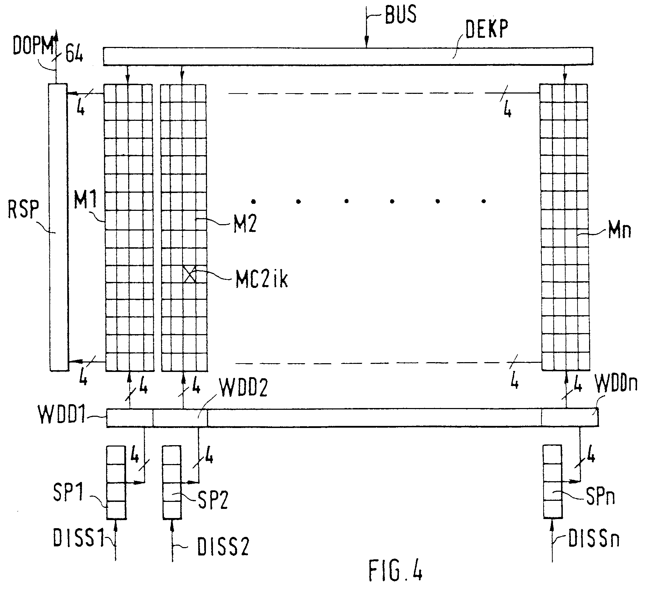

Die in den Figuren 3 und 4 gezeigten Umsetzer sind gegenüber den in den Figuren 1 bzw. 2 gezeigten Umsetzern abgewandelte Ausführungsbeispiele. Die Abwandlung liegt darin, daß die Schieberegister hier durch Dekodierschaltungen ersetzt sind, durch die die Speicherzellen adressiert werden. Diese Dekodierschaltungen, im wesentlichen Zähler modulo 16, sind mit den seriellseitigen Leseverstärkern zu seriellseitigen Lese- und Dekodierschaltungen RSD1, RSD2, ..., RSDn bzw. mit den seriellseitigen Treibern zu seriellseitigen Treiber- und Dekodierschaltungen WDD1, WDD2 ..., WDDn zusammengefaßt.

Eine weitere mögliche Abwandlung besteht darin, die Zwischenspeicher selbst als Schieberegister auszubilden. Dieser Abwandlung wurden keine eigenen Figuren gewidmet. Die Blockschaltbilder wären genau gleich wie die nach den Figuren 3 und 4, nur die Bedeutung der Blöcke wäre anders. Außerdem genügen dem Fachmann hier knappe Hinweise. Jede Spalte der Zwischenspeicher in den Figuren 3 und 4 wäre durch ein Schieberegister zu ersetzen, in das in dem zu Figur 3 analogen Fall parallel einzuschreiben und seriell auszulesen wäre und in dem zu Figur 4 analogen Fall seriell einzuschreiben und parallel auszulesen.

## Patentansprüche

1. Verfahren zum Umsetzen eines parallelisierten, zeitlich gemultiplexten Datenstroms (DIPM) in einzelne serielle Datenströme (DOSS1, DOSS2, ..., DOSSn), bei dem die einzelnen parallelen Datenwörter parallel in einen von mehreren Zwischenspeichern eingeschrieben und seriell aus diesem ausgelesen werden, **dadurch gekennzeichnet,** daß jedes parallele Datenwort gleichzeitig an die parallelen Eingänge aller Zwischenspeicher (M1, M2, ..., Mn) angelegt wird und daß für jedes Datenwort nur die Eingänge eines Zwischenspeichers aktiviert werden.

2. Verfahren zum Umsetzen mehrerer einzelner serieller Datenströme (DISS1, DISS2, ..., DISSn) in einen einzigen parallelisierten, zeitlich gemultiplexten Datenstrom (DOPM), bei dem je ein Datenwort eines jeden seriellen Datenstroms seriell in einen diesem Datenstrom zugeordneten Zwischenspeicher (M1, M2, ..., Mn) eingeschrieben und parallel aus diesem ausgelesen wird, **dadurch gekennzeichnet,** daß gleichzeitig alle parallelen Ausgänge aller Zwischenspeicher abgefragt werden und daß immer nur die Ausgänge eines Zwischenspeichers aktiviert werden.

3. Umsetzer zum Umsetzen eines parallelisierten, zeitlich gemultiplexten Datenstroms (DIPM) in einzelne serielle Datenströme (DOSS1, DOSS2, ..., DOSSn), mit je einem Zwischenspeicher (M1, M2, ..., Mn) pro seriellem Datenstrom, in den parallel eingeschrieben und aus dem seriell ausgelesen werden kann, **dadurch gekennzeichnet,** daß alle Zwischenspeicher eingangsseitig parallel geschaltet sind, daß die Eingänge eines jeden Zwischenspeichers zum Einschreiben von Daten aktivierbar sind und daß eine parallelseitige Dekodiereinrichtung (DEKP) vorhanden ist, mittels derer jeweils einer der Zwischenspeicher zum Einschreiben von Daten aktivierbar ist.

4. Umsetzer zum Umsetzen mehrerer einzelner serieller Datenströme (DISS1, DISS2, ..., DISSn) in einen einzigen parallelisierten, zeitlich gemultiplexten Datenstrom (DOPM), mit je einem Zwischenspeicher (M1, M2, ..., Mn) pro seriellem Datenstrom, in den seriell eingeschrieben und aus dem parallel ausgelesen werden kann, **dadurch gekennzeichnet,** daß alle Zwischenspeicher ausgangsseitig parallel geschaltet sind, daß die Ausgänge eines jeden Zwischenspeichers zum Aus lesen von Daten aktivierbar sind und daß eine parallelseitige Dekodiereinrichtung (DEKP) vorhanden ist, mittels derer die Ausgänge jeweils eines Zwischenspeichers zum Auslesen von Daten aktivierbar sind.

5. Umsetzer nach Anspruch 3 oder 4, dadurch gekennzeichnet, daß jeder Zwischenspeicher ein Schieberegister ist.

6. Umsetzer nach Anspruch 3, dadurch gekennzeichnet, daß jeder Zwischenspeicher aus einer Anzahl von Speicherelementen (MC2ik) besteht, mit Eingängen, die gemeinsam zum Einschreiben von Daten aktivierbar sind und mit Ausgängen, die einzeln zum Auslesen aktivierbar sind, daß alle Ausgänge parallelgeschaltet sind, und daß für jeden Zwischenspeicher eine serienseitige Dekodiereinrichtung (SR1, SR2, ..., SRn; RSD1, RSD2, ..., RSDn) vorhanden ist, die so ausgestaltet ist, daß die Ausgänge der Speicherelemente zyklisch aktiviert werden.

7. Umsetzer nach Anspruch 4, dadurch gekennzeichnet, daß jeder Zwischenspeicher aus einer Anzahl von Speicherelementen (MC2ik) besteht, mit Ausgängen, die gemeinsam zum Auslesen aktivierbar sind und mit Eingängen, die einzeln zum Einschreiben von Daten aktivierbar sind, daß alle Eingänge parallelgeschaltet sind und daß für jeden Zwischenspeicher eine serienseitige Dekodiereinrichtung (SR1, SR2, . .., SRn; WDD1, WDD2, ..., WDDn) vorhanden ist, die so ausgestaltet ist, daß die Eingänge zyklisch aktiviert werden.

8. Umsetzer nach Anspruch 6 oder 7, dadurch gekennzeichnet, daß die serienseitigen Dekodiereinrichtungen Schieberegister (SR1, SR2, . .., SRn) sind.
